# EUROPEAN PATENT APPLICATION

(11) **EP 4 160 499 A1**
(43) Date of publication of application: **05.04.2023**
(21) Application number: 22175632.3
(22) Date of filing: 26.05.2022
(51) Int. Cl.: G06Q 10/10, G06F 40/174, G06F 40/205

(54) **ARTIFICIAL INTELLIGENCE BASED COMPLIANCE DOCUMENT PROCESSING**

(30) Priority: 30.09.2021 US 202117491495
(71) Applicant: Intuit Inc., Mountain View, CA 94043 (US)
(72) Inventor: MATIAS, Joven, Mountain View, 94043 (US); YU, Jay Jie-Bing, Mountain View, 94043 (US); SINGH, Anu, Mountain View, 94043 (US); WEI, Ling Feng, Mountain View, 94043 (US)
(74) Representative: D Young & Co LLP

(57) **Abstract**

Processing compliance documents based on an artificial intelligence (AI) model is described herein. A system is configured to obtain a compliance document and obtain seed data associated with the compliance document. The seed data includes a plurality of sample text inputs and a plurality of sample computer readable operations associated with the plurality of sample text inputs. The system is also configured to parse text in the compliance document into one or more text segments, provide the one or more text segments and the seed data to the AI model, and obtain, from the AI model, one or more computer readable operations associated with the one or more text segments. The one or more computer readable operations are generated by the AI model based on few-shot learning using the seed data. The system is also configured to store the one or more computer readable operations for completing the compliance document.

## Description

### CROSS-REFERENCE TO RELATED APPLICATIONS

This Patent Application claims priority to U.S. Patent Application No. 17/491,495 entitled "ARTIFICIAL INTELLIGENCE BASED COMPLIANCE DOCUMENT PROCESSING" and filed on September 30, 2021, which is assigned to the assignee hereof. The disclosures of all prior Applications are considered part of and are incorporated by reference in this Patent Application.

### TECHNICAL FIELD

This disclosure relates generally to artificial intelligence based compliance document processing, including converting text in compliance documents into computer readable operations in order to complete the compliance documents for a user.

### DESCRIPTION OF RELATED ART

Various compliance documents (such as tax documents, insurance documents, accounting documents, securities reporting documents, and so on) are used by business and people for various transactions. For example, an individual may prepare and submit annual tax returns using a tax document (such as a Form 1040 in the United States). In another example, a corporation may provide a periodic financial report to investors using a securities document (such as a Form 10-Q or a Form 10-K in the United States). In a further example, a business or individual may submit an insurance claim using a claim form provided by the insurance agency. Such compliance documents provide guidance or instructions to ensure that the business or individual provides needed information and remains compliant in its endeavors (such as in filing a compliant tax return, a compliant financial report, a compliant insurance claim, and so on). One problem with manual review and completion of compliance forms by an individual is that the compliance form may include errors based on an individual being unfamiliar with the form or otherwise based on human error.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter. Moreover, the systems, methods, and devices of this disclosure each have several innovative aspects, no single one of which is solely responsible for the desirable attributes disclosed herein.

One innovative aspect of the subject matter described in this disclosure can be implemented as a computer-implemented method for compliance document processing. The method includes obtaining a compliance document. The method also includes obtaining a seed data associated with the compliance document. The seed data includes a plurality of sample text inputs and a plurality of sample computer readable operations associated with the plurality of sample text inputs. The method further includes parsing text in the compliance document into one or more text segments. The method also includes providing the one or more text segments and the seed data to an artificial intelligence (AI) model. The method further includes obtaining, from the AI model, one or more computer readable operations associated with the one or more text segments. The one or more computer readable operations are generated by the AI model based on few-shot learning using the seed data. The method also includes storing the one or more computer readable operations for completing the compliance document.

Another innovative aspect of the subject matter described in this disclosure can be implemented in a system for compliance document processing. An example system includes one or more processors and a memory storing instructions that, when executed by the one or more processors, cause the system to perform operations. The operations include obtaining a compliance document. The operations also include obtaining a seed data associated with the compliance document. The seed data includes a plurality of sample text inputs and a plurality of sample computer readable operations associated with the plurality of sample text inputs. The operations further include parsing text in the compliance document into one or more text segments. The operations also include providing the one or more text segments and the seed data to an AI model. The operations further include obtaining, from the AI model, one or more computer readable operations associated with the one or more text segments. The one or more computer readable operations are generated by the AI model based on few-shot learning using the seed data. The operations also include storing the one or more computer readable operations for completing the compliance document.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

Figure 1 shows an example network of a computing system and an artificial intelligence (AI) model system to process compliance documents, according to some implementations.
Figure 2 shows an example computing system to process compliance documents based on an AI model, according to some implementations.
Figure 3 shows an example diagram of components at a client, computing system, and AI model system to process compliance documents, according to some implementations.
Figure 4 shows an illustrative flow chart depicting an example operation for processing a compliance document, according to some implementations.
Figure 5 shows an example user interface for obtaining a compliance document and a user indication of a portion of text in the compliance document, according to some implementations.
Figure 6 shows an illustrative flow chart depicting an example operation for adjusting seed data based on reviewer feedback, according to some implementations.
Figure 7 shows an example user interface including an interface to obtain reviewer feedback, according to some implementations.
Figure 8 shows an illustrative flow chart depicting an example operation for processing a compliance document using adjusted seed data, according to some implementations.

Like numbers reference like elements throughout the drawings and specification.

### DETAILED DESCRIPTION

Implementations of the subject matter described in this disclosure may be used for processing compliance documents using an artificial intelligence (AI) model. In particular, systems and methods to convert text in compliance documents into computer readable operations in order to complete the compliance documents are described. Generation of the computer readable operations is based on an AI model. The output of the AI model is based on few-shot learning of the AI model, which allows the AI model to provide outputs and be updated in real-time without requiring significant training of the AI model.

As used herein, a compliance document refers to any document that is used by an individual, business, or other entity to comply with a requirement of a compliance entity requiring compliance from the individual or business. Example compliance entities include (but are not limited to) a government entity, an insurance company, or an investment firm. Example compliance documents include (but are not limited to) federal, state, or local tax return forms, tax return schedules, insurance claim forms, public corporation financial reporting forms, and mortgage applications. A compliance document includes text to instruct a person in completing the compliance document (such as information that is to be filled in for each portion of the compliance document). Traditionally, a person manually reviews the instructions and manually completes the compliance document based on his or her understanding of the instructions. Manual review and completion of compliance documents may require the person to have specific expertise about the compliance document to be completed. For example, an accountant may be needed to manually complete a tax return document, and the accuracy of the tax return document is based on the accountant's specific expertise and likelihood to make mistakes.

Personal computers, smartphones, and other electronic devices have been used to assist in completing compliance documents. For example, tax return software or online platforms may be used to complete one or more federal or state tax return documents. In another example, accounting software may be used to assist in completing a federally required financial reporting document for a corporation. The use of software or online platforms configured for specific compliance documents may reduce errors in completing a compliance document or allow an individual with less expertise in a specific area to complete a compliance document in such area. For example, a tax return online platform may allow a non-accountant to complete a tax return document to be filed with a government tax authority.

For each relevant compliance document that is to be completed using a compliance software or online platform, the compliance document is ingested and converted into a plurality of computer readable operations for the compliance software or online platform. For example, for a tax return software, each tax return form, tax return schedule, set of tax return instructions, and so on is reviewed and converted to computer readable operations to fill in each tax return form or tax return schedule. Traditionally, one or more individuals would review each document and create the computer readable operations for the document (such as writing program code including the computer readable operations that applies to the reviewed document). For example, text in a tax return form may include instructions indicating what is to be done to fill in different portions of the form. In a specific example, the text in a U.S. Individual Income Tax Return Form 1040 recites on line 9 (total income), "Add lines 1, 2b, 3b, 4b, 5b, 6b, 7, and 8. This is your total income." An example computer readable operation for line 9 may be the instruction "ADD(line_1, line 2b, line_3b, line_4b, line_5b, line_6b, line_7, and line_8)." If a person is to manually review the document and generate the computer readable operations, the person writes the instruction for line 9 into the program code for the document of the tax return software. Another person or group may then perform quality control and testing to ensure that no mistakes are included in the program code written by the person. As used herein, a computer readable operation refers to a mathematical operation (such as addition, subtraction, multiplication, and division), a data transfer operation (such as a move, copy, paste, and so on), or other suitable operation to be performed on data to complete a compliance document.

Compliance documents change and are updated overtime. For example, the Internal Revenue Service (IRS) releases new and updated tax forms and schedules based on changes in taxation law and changes in internal guidance. In addition, the rate at which new and updated tax forms are released increases over time. As the rate of compliance documents (such as tax forms and schedules) being released increases, the amount of time that would be required to manually review and convert the compliance documents and test the program code generated in converting the compliance documents increases.

Artificial intelligence (AI) models may be used to accelerate the conversion of compliance document text into computer readable operations. For example, a machine learning (ML) model may be trained to ingest text from a compliance document and convert the text in the compliance document into computer readable operations. Example ML models may be based, e.g., on one or more of decision trees, random forests, logistic regression, nearest neighbors, classification trees, control flow graphs, support vector machines, naive Bayes, Bayesian Networks, value sets, hidden Markov models, or neural networks. To train the ML model, training data (such as prior documents, text, and associated computer readable operations) is provided to the ML model to train the ML model to generate computer readable operations for the prior documents that matches the computer readable operations of the training data. Typically, the accuracy of the ML model's output is based on the size of the training data and the amount of time allowed in training the ML model. For example, the output of an ML model may be more accurate if the size of the training data increases and the amount of time allowed to train the ML model increases.

One problem with conventional training of an ML model to accurately generate computer readable operations for a compliance document is that training may take a significant amount of time and processing resources using a significant amount of training data. If compliance documents change or new compliance documents are released periodically, training an ML model is required to be performed periodically, and significant time and resources would be required to retrain an ML model before the ML model can again be used to accurately generate computer readable operations for compliance documents. As a result of delays caused by conventionally training the ML model, conventionally updating/training an ML model in real-time while the ML model is in use for compliance documents cannot be performed. As such, there is need for a means in using an AI model that does not require conventional training but can still provide accurate computer readable operations for compliance documents in real-time.

Various implementations of the subject matter disclosed herein provide one or more technical solutions to the technical problem of automated conversion of compliance documents into computer readable operations for the completion of such compliance documents. In some implementations, a computing system is configured to obtain a compliance document and obtain a seed data associated with the compliance document. The seed data includes a plurality of sample text inputs and a plurality of sample computer readable operations associated with the plurality of sample text inputs. The computing system is also configured to parse text in the compliance document into one or more text segments, provide the one or more text segments and the seed data to an AI model, and obtain, from the AI model, one or more computer readable operations associated with the one or more text segments. The one or more computer readable operations are generated by the AI model based on few-shot learning by the AI model using the seed data. The computing system is also configured to store the one or more computer readable operations for completing the compliance document, which may be used in conjunction with user data by the computing system to complete the compliance document.

Various aspects of the present disclosure provide a unique computing solution to a unique computing problem that did not exist prior to the creation of AI and ML models. As such, implementations of the subject matter disclosed herein are not an abstract idea such as organizing human activity or a mental process that can be performed in the human mind. Training an AI model and using the AI model to generate computer readable operations in real-time cannot be performed in the human mind, much less using pen and paper.

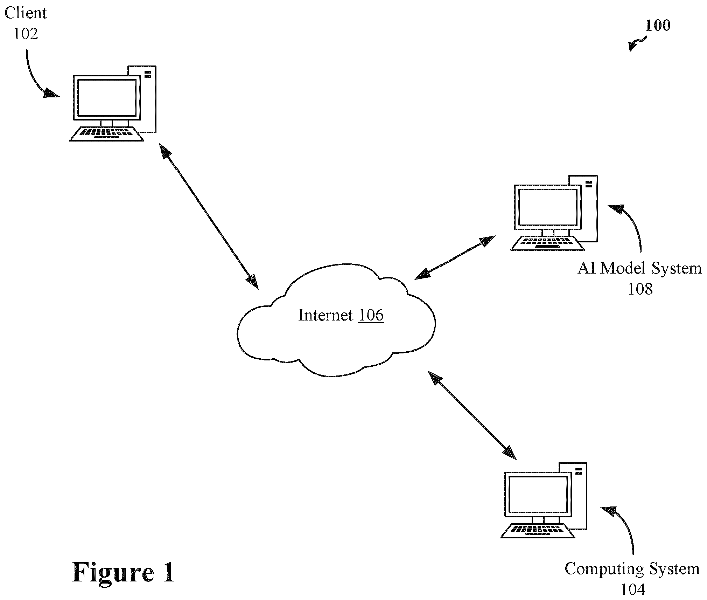

Figure 1 shows an example network 100 of a computing system 104 and an AI model system 108 to process compliance documents, according to some implementations. The computing system 104 may be coupled to the AI model system 108 via the internet 106. The computing system 104 may also be coupled to a client 102 via the internet 106. The client 102 may be a user's computing system (such as a user's personal computer, smartphone, or other computing device), and the client 102 is to provide a compliance document for processing and user input. The client 102 may obtain one or more documents from a compliance entity (such as the IRS for tax return forms or an insurance company for insurance claim forms). In some implementations, a compliance document may be an electronic document (such as portable document format (PDF) documents including electronic text). In this manner, text may be easily obtained from the electronic document. In some other implementations, the compliance document may be a paper document. If the compliance document is in paper form, the document may be scanned at the client 102 and optical character recognition (OCR) may be performed to obtain the text from the compliance document.

The computing system 104 may be an entity's computing system to obtain and process the compliance document to provide data to an AI model to generate the computer readable operations for the compliance document. For example, the computing system 104 may obtain electronic text from an electronic compliance document or may perform OCR to obtain the text from a paper compliance that is scanned at the client 102. The text may be formatted or otherwise parsed for providing to an AI model. In some implementations, the entity may be a company providing a service to a user, such as a company providing a tax preparation software or online platform. In a specific example, a client portal may be accessed by a user at the client 102 to interface with the computing system 104. The client portal may be an application (such as a dedicated smartphone application), a web portal (such as a website accessed using a web browser of the client 102), or another suitable interface with the computing system 104. A compliance document may be uploaded to the computing system 104 using the client portal.

The AI model system 108 may be a computing system (such as a server or a local area network) hosting the AI model to be used to generate computer readable operations for a compliance document. The AI model may be sufficiently trained through few-shot learning to generated accurate computer readable operations. For example, the AI model may include the Generative Pre-trained Transformer 3 (GPT-3) to generate the computer readable operations, with the AI model system 108 being the OpenAI system hosting the GPT-3 model. The computing system 104 may interface with the AI model system 108 through an application programming interface (API) for the AI model. For example, the API provided by OpenAI to interface with the GPT-3 model may be used to provide text from compliance documents to the model and obtain computer readable operations from the model.

As noted above, the AI model may be sufficiently trained through few-shot learning. Few-shot learning is a machine learning based on a few samples and a few iterations by the model during training. As compared to conventional supervised training, few-shot learning does not require a large set of training data and a large number of iterations or amount of time to train the model using the large set of training data. The AI model to be trained using few-shot learning may be specially configured to output results based on limited samples and training (such as the GPT-3 model). For example, to be able to generate computer readable operations after few-shot learning, the AI model may be pretrained based on a more general corpus of information and a generally desired output for the AI model (such as for the GPT-3 model). The amount of time to train a model is significantly reduced using few-shot learning as compared to conventional training methods. As used herein, the training data used for few-shot learning is referred to as seed data, which is smaller in size than the typical training data used during conventional training of a model. Seed data in the use case of processing compliance documents includes a plurality of sample text inputs that may appear in one or more compliance documents and a plurality of sample computer readable operations associated with the plurality of sample text inputs.

With reference to network 100, one or more compliance documents may be obtained from the client 102, the one or more compliance documents' text may be processed by the computing system 104, and the computer readable operations may be generated from the text by the AI model system 108 (after few-shot learning). The computing system 104 may store the computer readable operations in order to use them in completing a compliance document. Network 100 is but one example depiction of an ecosystem for processing compliance documents. The example network is presented and used in the examples herein for clarity in describing aspects of the present disclosure. However, a different network or system configuration may be used to perform aspects of the present disclosure. For example, the computing system 104 may be configured to obtain compliance documents directly from a source. For example, the computing system 104 may obtain tax return forms and schedules directly from the IRS's website. In another example, the computing system 104 may be configured to host the AI model to be used to generate the computer readable operations. In this manner, one or both of the client 102 or the AI model system 108 may not be required to perform aspects of the present disclosure. In another example, while one client 102 is depicted, any number of clients may be coupled to the computing system 104. In this manner, compliance documents may be received from a plurality of clients. In addition, users of the plurality of clients may be reviewers of the computer readable operations from the AI model to check the accuracy of the results and improve the performance of the AI model through providing feedback.

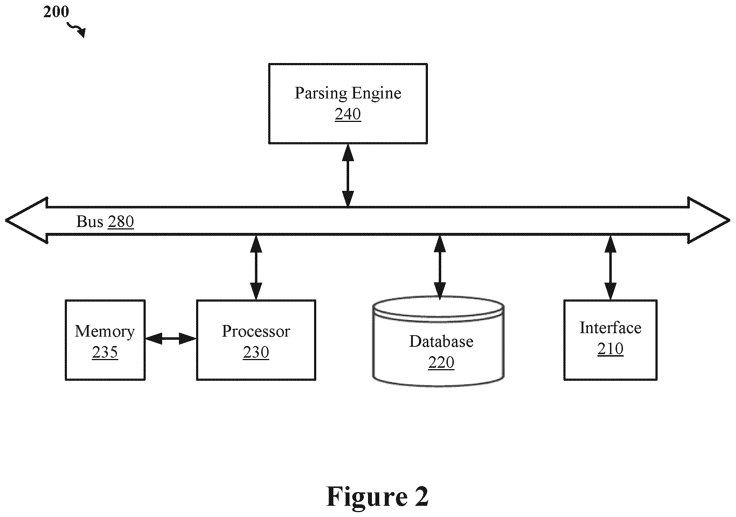

Figure 2 shows an example system 200 to process compliance documents based on an AI model, according to some implementations. The system 200 may be an example implementation of the computing system 104 in Figure 1. The system 200 includes an interface 210, a database 220, a processor 230, a memory 235 coupled to the processor 230, and a parsing engine 240. In some implementations, the various components of the system 200 may be interconnected by at least a data bus 280, as depicted in the example of Figure 2. In other implementations, the various components of the system 200 may be interconnected using other suitable signal routing resources. While not depicted in Figure 2, in some implementations, the system 200 may also include an AI model (if the AI model is not hosted by a remote computing system).

The interface 210 may be one or more input/output (I/O) interfaces to obtain compliance documents, seed data, user data, user input, or other information to be used by the system 200. The interface 210 may also provide computer readable operations associated with a compliance document (such as for review) or a completed compliance document (such as to a compliance entity or a user requesting the completed compliance document). An example interface may include a wired interface or wireless interface to the internet or other means to communicably couple with other devices. For example, the interface 210 may include an interface with an ethernet cable or a wireless interface to a modem, which is used to communicate with an internet service provider (ISP) directing traffic to and from one or more client devices (such as a user's personal computer) or an AI model computing system (such as the OpenAI computing system hosting the GPT-3 model).

The interface 210 may be configured to provide one or more computer readable operations for review by one or more reviewers. A reviewer may be local to the computing system 200. In this manner, the interface 210 may include a display, a speaker, a mouse, a keyboard, or other suitable input or output elements that allow interfacing with the reviewer. As also described herein, reviewers may be remote. As such, the system 200 may use the interface 210 to provide the one or more computer readable operations to a team of dedicated reviewers or to be crowdsourced to a plurality of users with interest in providing feedback and improving the output of the AI model for processing compliance documents.

The database 220 may store the compliance documents obtained by the interface 210. In some implementations, the compliance documents include one or more of electronic documents (such as PDF documents) with electronic text or scans of paper documents (which may be in an image format, such as joint photographic experts group (JPEG) format). If the compliance documents include one or more scans, the computing system 200 may be configured to perform OCR on a scan to extract text from the document. The database 220 may also store the text from the compliance documents (which may be the raw text or text segments after parsing), computer readable operations associated with the compliance documents that are output by the AI model, and seed data to be used for training the AI model based on few-shot learning. In some implementations, the database 220 may include a relational database capable of presenting information as data sets in tabular form and capable of manipulating the data sets using relational operators. The database 220 may use Structured Query Language (SQL) for querying and maintaining the database 220. While the examples herein depict operations to be performed by the system 200 for processing one compliance document for one user for clarity purposes, the system 200 may be configured to perform operations for processing any number of compliance documents for any number of users. As such, the database 220 may be configured to maintain information (such as seed data or computer readable operations) for a plurality of compliance documents.

The processor 230 may include one or more suitable processors capable of executing scripts or instructions of one or more software programs stored in system 200 (such as within the memory 235). For example, the processor 230 may be capable of executing one or more applications or the parsing engine 240. If the system 200 includes an AI model, the processor 230 may also be capable of executing the AI model. The processor 230 may also be capable of processing feedback from one or more reviewers and adjusting the seed data to improve the performance of the AI model. The processor 230 may include a general purpose single-chip or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. In one or more implementations, the processor 230 may include a combination of computing devices (such as a combination of a DSP and a microprocessor, a plurality of microprocessors, one or more microprocessors in conjunction with a DSP core, or any other such configuration).

The memory 235, which may be any suitable persistent memory (such as non-volatile memory or non-transitory memory) may store any number of software programs, executable instructions, machine code, algorithms, and the like that can be executed by the processor 230 to perform one or more corresponding operations or functions. For example, the memory 235 may store the one or more applications or the parsing engine 240 that may be executed by the processor 230. If the system 200 also includes an AI model, the memory 235 may also store the AI model that may be executed by the processor 230. The memory 235 may also store the text or parsed text before or after processing by the parsing engine 240, outputs from an AI model (such as computer readable operations), feedback from one or more reviewers, seed data, or any other data for operation of the system 200. In some implementations, hardwired circuitry may be used in place of, or in combination with, software instructions to implement aspects of the disclosure. As such, implementations of the subject matter disclosed herein are not limited to any specific combination of hardware circuitry and/or software.

The parsing engine 240 parses text from one or more compliance documents stored in the database 220 into text segments. A text segment refers to a grouping of text in a compliance document that corresponds to at least one computer readable operation. For example, a form 1040 from the IRS includes text on different lines, and the text for a line may indicate instructions to be converted to one or more computer operations for completing the line of the form 1040. For example, line 9 (total income) from form 1040 may include text, "Add lines 1, 2b, 3b, 4b, 5b, 6b, 7, and 8. This is your total income." An example computer readable operation for line 9 may be the instruction "ADD(line_1, line_2b, line_3b, line_4b, line_5b, line_6b, line_7, and line_8)."

In some implementations, a text segment may be based on text in a line, with text being parsed into text segments based on one or more line breaks. In the above example for line 9 of form 1040, "Add lines 1, 2b, 3b, 4b, 5b, 6b, 7, and 8. This is your total income," may be one text segment. A line break may be a special character in electronic text of an electronic document. The parsing engine 240 may be configured to identify the line breaks in parsing text in the compliance document into one or more text segments.

In some implementations, a text segment may be based on punctuation (such as a period, a question mark, a semi-colon, etc.). In this manner, text may be segmented into separate sentences. In the above example for line 9 of form 1040, "Add lines 1, 2b, 3b, 4b, 5b, 6b, 7, and 8. This is your total income," may be two text segments. Punctuation may be special characters in electronic text of an electronic document. The parsing engine 240 may be configured to identify the punctuation in parsing text in the compliance document into one or more text segments.

In some implementations, a text segment is based on a user indication of a portion of text in a compliance document. For example, a user may highlight, select, or otherwise indicate a portion of text that is to be parsed into a text segment. In this manner, the parsing engine 240 may be configured to parse the indicated text into a text segment. The user may indicate any number of portions of text, and the parsing engine may parse the portions into text segments.

While line breaks, punctuation, and user indicated text are described as different means for parsing text, a combination of one or more of line breaks, punctuation, or user indicated text may be used in generating text segments. For example, a user may highlight a plurality of sentences to be converted into text segments, and the parsing engine 240 may parse the highlighted text into a plurality of text segments based on punctuation, with each text segment being a sentence in the highlighted text. While some example implementations of parsing compliance document text is provided, the system 200 may parse the text in any suitable manner to generate the text segments.

While the parsing engine 240 is depicted as a separate, single component of the system 200 in Figure 2, the parsing engine 240 may include additional components, may include software including instructions stored in memory 235 or the database 220, may include application specific hardware (e.g., one or more ASICs), or a combination of the above. As such, the particular architecture of the system 200 shown in Figure 2 is but one example of a variety of different architectures within which aspects of the present disclosure may be implemented. While the examples herein are described with reference to system 200, any suitable system may be used to perform the operations described herein.

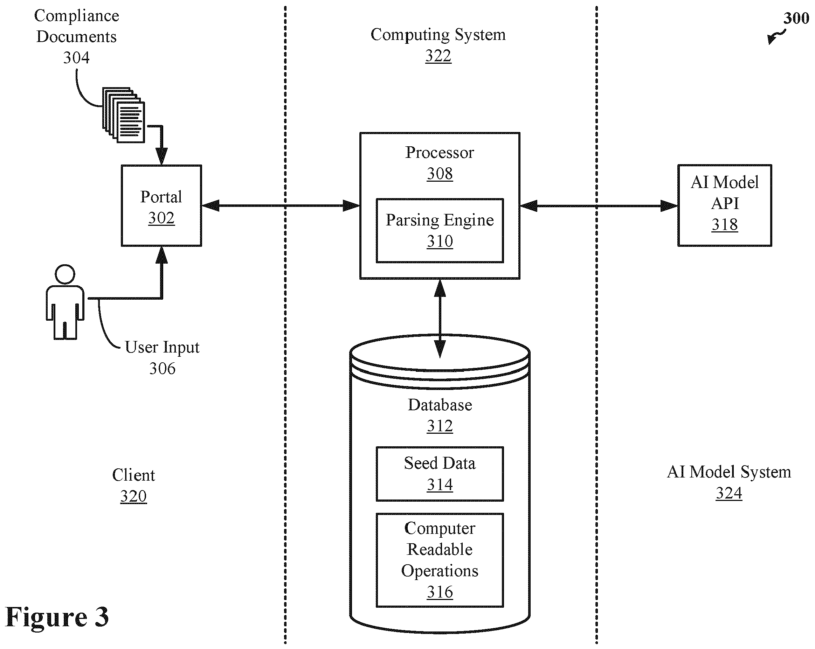

In some implementations, the one or more text segments are provided to an AI model to generate one or more computer readable operations associated with the compliance document. If the system 200 includes the AI model, the system 200 may execute the AI model (trained using few-shot learning based on a seed data stored in the database 220) to ingest the one or more text segments and generate one or more computer readable operations. If the AI model is remote to the computing system 200, the system 200 may provide the one or more text segments and the seed data to the AI model for the AI model to generate the one or more computer readable operations. As noted above, the AI model may be able to generate computer readable operations after few-shot learning using the seed data. To be able to generate computer readable operations after few-shot learning, the AI model may be pretrained based on a more general corpus of information and a generally desired output for the AI model. For example, the GPT-3 model is a deep learning model pretrained by OpenAI to produce human-like text in a desired format. The seed data provides samples of the specifically desired format of the text to be output by the GPT-3 model (e.g., computer readable operations for the system 200), which is learned by the GPT-3 model via few-shot learning. The one or more computer readable operations generated by the AI model may be stored in the database 220, which may be used to complete the compliance document for one or more users. Processing a compliance document and generating the one or more computer readable operations are described in more detail below with reference to Figure 3.

Figure 3 shows an example diagram 300 of components at a client 320, computing system 322, and AI model system 324 to process compliance documents, according to some implementations. The client 320 may be an example implementation of the client 102 in Figure 1. The computing system 322 may be an example implementation of the computing system 104 in Figure 1 or system 200 in Figure 2. The AI model system 324 may be an example implementation of the AI model system 108 in Figure 1. Figure 3 is simplified to not show all components of the client 320, the computing system 322, and the AI model system 324 for clarity.

The client 320 may be configured to provide one or more compliance documents 304 and user input 306 to the computing system 322. In some implementations, the client 320 includes a portal 302 for obtaining the compliance documents 304 and user input 306 and providing such to the computing system 322. The portal 302 may include a web portal, dedicated application, or other means of a user interface (such as a graphical user interface (GUI)) of the client 320 to interact with the user. For example, a user may open a web browser, access a specific website associated with a service provided by the computing system 322, and interact with the website to provide a compliance document and user input. User input may include an indication of text in the compliance document to be parsed into text segments and converted to computer readable operations. User input may also include feedback regarding previously generated computer readable operations (such as verifying the accuracy of a computer readable operation, providing corrections to a computer readable operation, or providing a computer readable operation for an undefined operation by the AI model (such as for a text segment that cannot be processed by the AI model)).

The computing system 322 may be configured to parse text from an obtained compliance document 304 into text segments, provide the text segments to an AI model, obtain compute readable operations generated by the AI model from the text segments, and store the computer readable operations. The computing system 322 may also complete a compliance document using the computer readable operations. To parse the text into text segments, the processor 308 may execute a parsing engine 310 (which may be an example implementation of the processor 230 and parsing engine 240, respectively). While not shown, the database 312 (which may be an example implementation of the database 220) may store the text segments and the obtained compliance document 304. The database 312 may also store the seed data 314 to be used for few-shot learning of the AI model and the computer readable operations 316 generated by the AI model trained using few-shot learning based on the seed data 314. After parsing text into one or more text segments, the computing system 322 may provide the one or more text segments and the seed data 314 associated with the compliance document to an AI model. The computing system 322 may format the data provided to the AI model into a format readable by the AI model.

The AI model system 324 is configured to host the AI model to be used by the computing system 322 to generate one or more computer readable operations for a compliance document. The AI model system 324 may include an AI model API 318 to be used to receive the one or more text segments and the seed data in a specific format from the computing system 322. In some implementations, the AI model includes the GPT-3 model, and OpenAI provides an API to be used to provide the one or more text segments and the seed data to the GPT-3 model and obtain the resulting computer readable operations from the GPT-3 model. In some implementations, the AI model includes the davinci model of the GPT-3 model. While some example AI models are depicted, any suitable AI model may be used to generate the computer readable operations after few-shot learning.

In some implementations, the one or more text segments may be included in one or more JavaScript Object Notation (JSON) objects, and the seed data may be included in the same or different JSON objects. Program code for processing the compliance documents may include API instructions to interface with the AI model API 318 and pass one or more objects between the AI model and the computing system 322. The one or more JSON objects including the text segments and the seed data are transmitted by the computing system 322 to the AI model system 324 using the AI model API 318, and the resulting computer readable operations are provided by the AI model system 324 to the computing system 322 using the AI model API 318. The computer readable operations may be included in one or more JSON objects provided by the AI model system 324 to the computing system 322. The computer readable operations in the one or more received JSON objects may be stored with computer readable operations 316 in the database 312, with the received computer readable operations being associated with a specific compliance document. One or more computer readable operations may also be associated with a specific text or portion of a compliance document so that the computer readable operations may be used in automatically completing the compliance document for a user based on user data that may be stored or may be received from the user (such as via the portal 302).

As noted above, the AI model may be trained based on few-shot learning using the seed data 314. The seed data 314 may be a small amount of training data associated with a specific compliance document or a specific type of compliance documents. For example, federal income tax return forms and schedules from the IRS include similar language such that text from one document and its resulting computer readable operations may be similar to text and resulting computer readable operations for another document. The below table provides an example depiction of a seed data including sample text input and associated sample computer readable operations.

| Operation Type | Sample Text Input | Sample Computer Readable Operation |
|---|---|---|
| Arguments | line a | line_a |
| | lines a, b | line a, line b |
| Membership | Schedule a, line b | Schedule_a.line_b |
| Arithmetic | Add lines a and b | ADD(line_a, line b) |
| | Add line a and line b | ADD(line_a, line b) |
| | Subtract line a from line b | SUBTRACT(line b, line_a) |
| | Multiply line a to line b | MULTIPLY(line_a, line b) |
| Relational | x is less than y | LT(x, y) |
| | x is less than or equal to y | LTE(x, y) |
| | x is greater than y | GT(x, y) |
| | x is greater than or equal to y | GTE(x, y) |
| | x is more than y | GT(x, y) |
| | x is more than or equal to y | GTE(x, y) |
| Conditional | If x, then y else z | IF(x, y, z) |
| | If x, y | IF(x, y) |
| Complex | If line b is more than line a, subtract line a from line b | IF(GT(line_b, line_a), SUBTRACT(line_b, line_a)) |
| | Add Schedule a, line x, and line y and enter the total | ADD(Schedule_a.line_x, Schedule_a.line_y) |
| | Enter the smallest of line x, y, or z | MIN(line _x, line _y, line_z) |

As shown, the seed data is smaller in size than is typically required for training data in conventionally training a ML model. For the seed data, the sample computer readable operations may be in any suitable computer language format to be used by the computing system 322. The sample text input may be any suitable sample text format that may appear in the one or more compliance documents to be processed. For example, the above example seed data may be associated with tax return forms and schedules. In some implementations, the computing system 322 may be configured to process different types of compliance documents. The database 312 may store different seed data 314 associated with different types of compliance documents. To note, while the seed data 314 may differ for different types of compliance documents, the same seed data may be used for different users if the compliance documents to be processed are of the same type.

The above example seed data includes an operation type of arguments (which are objects on which other operations may be performed). For example, an object in form 1040 on which an arithmetic operation is to be performed may be referred to as line x (where x is an integer). The program for completing the compliance document may call the object line x as "line _x." As such, the arguments, may be used to convert text indicating an object to an object name that is to be used by the program. The above example seed data also includes an operation type of membership. For example, a specific object may belong to a specific compliance document or a specific portion of a compliance document. The membership operation type indicates examples of text indicating such relationship and the computer readable code to be used by the program for the example text. In the context of a form 1040 or other tax return forms, "Schedule a, line b" may refer to "Schedule_a.line_b" as used by the program, indicating that line b is from schedule a.

The above example seed data also includes operation types of arithmetic operations (including addition, subtraction, and multiplication), relational operations (including greater than (GT), greater than or equal to (GTE), less than (LT), and less than or equal to (LTE)), conditional operations (including if operations and if/then operations), and complex operations. Complex operations may be a combination of one or more other types of operations (such as conditional operations and arithmetic operations or membership operations and arithmetic operations) or other operations that do not fit into any of the other types of operations (such as a minimum or a maximum mathematical operation). To note, the above example seed data in the table is one example of a seed data, and the example seed data depicted is not exhaustive of the type of sample text inputs and sample computer readable operations that may be included in seed data.

The seed data is provided to the AI model using the AI model API 318, and the AI model is trained based on few-shot learning using the seed data. Since the seed data is relatively small compared to typical training data for conventional training, the AI model may be trained in real-time such that the AI model may generate results in real-time. In this manner, one or more computer readable operations may be generated in a matter of moments after a user indicates the text to be converted to computer readable operations.

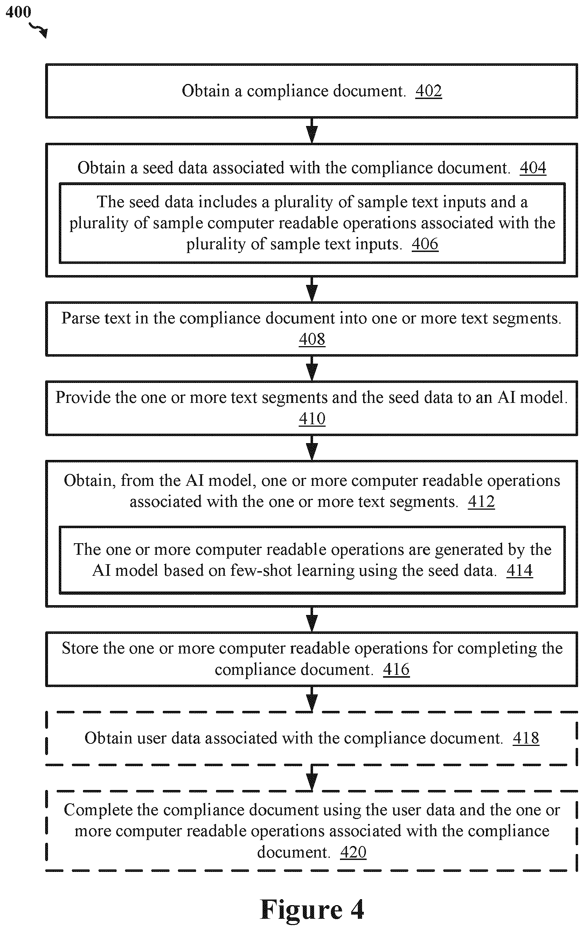

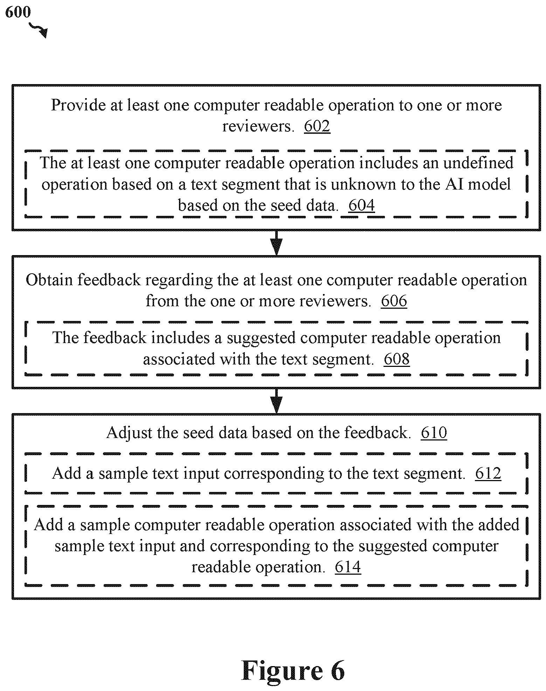

The AI model may be unable to generate a computer readable operation or may generate an incorrect computer readable operation for a text segment based on the seed data. For example, the seed data may not include a sample text input that applies to a new instruction in a compliance document. As such, the seed data may be adjusted as desired to increase the accuracy of the output from the AI model. In some implementations, a text segment and unknown operation or possibly incorrect computer readable operation may be provided to one or more reviewers. For example, a user indicating the text to be converted may be provided the computer readable operations generated for the indicated text (such as via the portal 302). The user may then provide feedback (included in user input 306) regarding the computer readable operations, such as indicating if the computer readable operations are correct, correcting the computer readable operations, or providing a computer readable operation that should have been created for the indicated text. The computing system 322 may adjust the seed data based on the feedback (such as including a corrected computer readable operation or a new computer readable operation in the sample computer operations for the associated text segments). The computing system 322 may then provide the adjusted seed data to the AI model the next time that the AI model is to generate one or more computer readable operations for the compliance document or a similar type of compliance document. Adjusting the seed data and using the seed data to improve the results of the AI model are described in more detail below with reference to Figures 6-8. Referring back to the general operation of the computing system 322, the computing system 322 is to be used to process compliance documents for generating computer readable operations, which is described below with reference to Figure 4.

Figure 4 shows an illustrative flow chart depicting an example operation 400 for processing a compliance document, according to some implementations. The example operation 400 is described as being performed by the system 200 for clarity, but any suitable system may be used to perform the example operation 400. In addition, the compliance document is a tax return form and the AI model is the GPT-3 model in the example, but any suitable type of compliance document and AI model may be used. While the example operation 400 is described with reference to processing one compliance document for one user for clarity, the steps of operation 400 may be performed or repeated to process a plurality of compliance documents for a plurality of users.

At 402, the system 200 obtains a compliance document. In some implementations, the compliance document is obtained via the interface 210 from a client 102. For example, a user may upload an electronic compliance document 304 using the portal 302. In another example, the compliance document may be obtained from the compliance entity or from another source. The obtained compliance documents may be stored in database 220.

At 404, the system 200 obtains a seed data associated with the compliance document. The seed data includes a plurality of sample text inputs and a plurality of sample computer readable operations associated with the plurality of sample text inputs (406). In some implementations, an initial seed data may be obtained from a local user of the computing system 200 or from a client 102. For example, a local user to the system 200 may program an initial seed data (such as the example seed data in the above table), and the initial seed data may be stored in the database 220. As noted above, the system 200 may adjust the seed data over time (with the adjustments being stored in the database 220) based on feedback from one or more reviewers of the computer readable operations generated by the AI model. Obtaining the seed data associated with the compliance document may refer to retrieving the current seed data for the compliance document from the database 220. For example, if the database 220 stores a seed data associated with tax return documents and the compliance document obtained in step 402 is an updated form 1040 issued by the IRS, the system 200 may retrieve the seed data associated with tax return documents. The seed data may be included in a JSON object to be provided to the AI model.

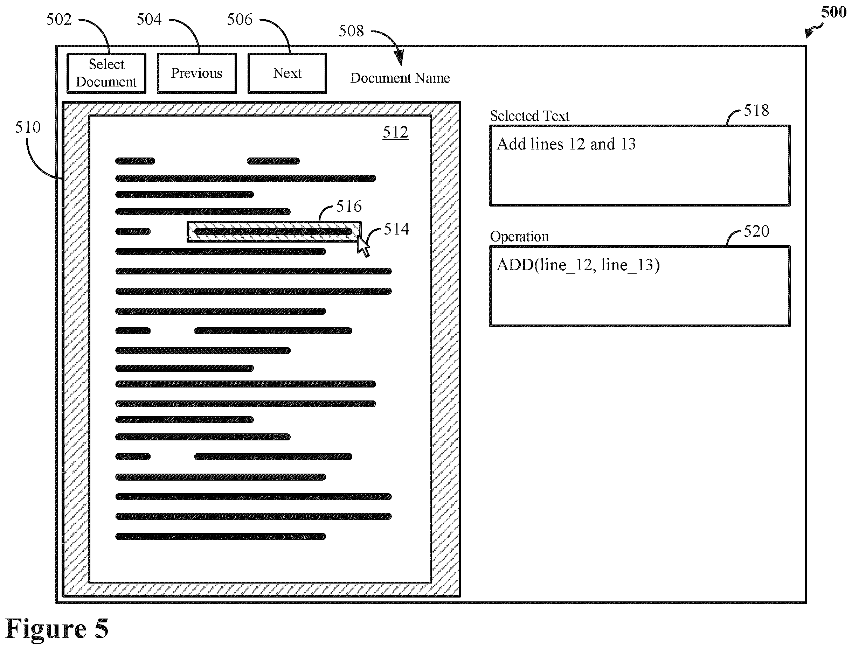

At 408, the system 200 (such as the parsing engine 240) parses text in the compliance document into one or more text segments. In some implementations, the parsing engine 240 parses the text into sentences based on punctuation. In some implementations, the parsing engine 240 parses the text into text lines based on line breaks. In some implementations, the parsing engine 240 parses the text into text segments based on a user indication of a portion of text in the compliance document (such as described below with reference to Figure 5). The one or more text segments may be included in one or more JSON objects to be provided to the AI model.

At 410, the system 200 provides the one or more text segments and the seed data to the AI model. If the AI model is hosted on a remote system, the JSON objects including the one or more text segments and the seed data may be transmitted via the interface 210 and using the AI Model API 318. If the AI model is hosted by the system 200, the system 200 may internally provide the one or more text segments and seed data to the AI model.

At 412, the system 200 obtains, from the AI model, one or more computer readable operations associated with the one or more text segments. The one or more computer readable operations are generated by the AI model based on few-shot learning using the seed data (414). As noted above, the seed data is used as training data for few-shot learning that may be performed in real-time. As such, the AI model may generate the computer readable operations in real-time. For example, the GPT-3 model may receive the text segments and the seed data, train itself using the seed data, and generate the computer readable operations from the text segments in a matter of moments. In some implementations, text segments may be provided sequentially, with computer readable operations being generated as the text segments are received. In some implementations, a plurality of text segments may be provided in a single batch, and computer readable operations may be generated for the batch of text segments. The AI model may generate the one or more computer readable operations in one or more JSON objects that are provided to the system 200.

At 414, the system 200 stores the one or more computer readable operations for completing the compliance document. In some implementations, the one or more computer readable operations are stored in the database 220.

As noted above, the one or more computer readable operations may be used in completing the compliance document for a user. For example, a user may provide user specific data required for the compliance document, and the system 200 may complete the compliance document using the user specific data and the computer readable operations. In a specific example, for a form 1040 from the IRS, the associated computer readable operations include operations for filling in the different portions of the form using user specific data (such as gross income, deductions, etc.).

In some implementations, at 418, the system 200 may obtain user data associated with the compliance document. In some implementations, the user may provide the user data (such as via the portal 302). In some implementations, the system 200 may obtain the user data from another entity. For example, for form 1040, some of the user data may be included in a W-2 form issued by an employer of the user. The system 200 may be configured to download the W-2 form from the employer or from a payroll service and obtain the user data from the downloaded form. While some examples of obtaining user data are provided, user data may be obtained in any suitable manner. Having obtained the user data, the system 200 may complete the compliance document using the user data and the one or more computer readable operations associated with the compliance document (420).

As noted above, obtaining a compliance document may be via a portal 302. In some implementations, the portal includes a user interface (such as a GUI) to allow a user to interface with the computing system to provide one or more compliance documents. The GUI may also be used by the user to indicate a portion of text of a compliance document that is to be converted into one or more computer readable operations by the AI model.

Figure 5 shows an example user interface 500 for obtaining a compliance document and a user indication of a portion of text in the compliance document, according to some implementations. The user interface may be in a web browser open on or an application running on the user's computing system (such as the user's personal computer or smartphone). The example user interface 500 includes a select document button 502. The user may click on the button 502 to indicate that a compliance document is to be selected and uploaded. If the user interacts with the user interface using a mouse (which may be associated with cursor 514), the user may use the cursor to select the button 502. If the user interface is on a touch sensitive display, the user may tap on the button 502. After selecting the button 502, a pop-up window or other means of indicating files stored on or accessible by the user system may be displayed. The user may select the desired compliance document (such as document 512). The compliance document is then displayed in window 510, and the document name of the compliance document is displayed at location 508. The window 510 may be configured to display one page at a time. If the compliance document includes a plurality of pages, the user may use the previous button 504 and the next button 506 to navigate between the pages being displayed in the window 510. In some other implementations, the window 510 may be configured to display a plurality of pages of a compliance document.

As noted above, parsing text into text segments may be based on a user indication of a portion of text in a compliance document. In some implementations, the user indicates a portion of text of the compliance document 512 displayed in the window 510. For example, the user may use the cursor 514 to highlight the portion of text 516 as text to be converted to one or more computer readable operations by the AI model. The selected text box 518 includes the portion of text 516 as highlighted by the user. For example, the compliance document 512 may be a tax return form, and the portion of text 516 may include the text "Add lines 12 and 13."

In some implementations, when the compliance document is selected, the compliance document is uploaded to the system 200. In this manner, the window 510 may display the compliance document as stored on the system 200 after upload, and the system 200 may obtain the indication of the portion of text 516 of the compliance document stored on the system 200 once the text is highlighted by the user. In some other implementations, the local copy of the compliance document is displayed in the window 510. The compliance document may then be provided to the system 200 along with the indication of the portion of text 516.

After the AI model generates the compute readable operation for the portion of text 516 (which is parsed into a text segment by the system 200), the system 200 may provide the computer readable operation to the user device to be displayed in the user interface. For example, the operation box 520 may display the computer readable operation generated for the portion of text in the selected text box 518. In the example of the text being "Add lines 12 and 13," the operation box 520 may display the correct computer readable operation "ADD(line_12, line_13)." As noted above, the computer readable operations are stored by the system 200. In some implementations, the computer readable operations may also be stored at the user device.

The AI model may generate an incorrect computer readable operation or the AI model may be unable to generate a computer readable operation for a text segment based on few-shot learning using the existing seed data. For example, the existing seed data may not include a sufficient sample corresponding to text highlighted by the user or other text segments of a compliance document. As such, the seed data may be adjusted to account for such deficiencies in the outputs from the AI model. In some implementations, one or more reviewers may review the output of the AI model for the text segments and provide feedback, and the system 200 may adjust the seed data based on the feedback.

Figure 6 shows an illustrative flow chart depicting an example operation 600 for adjusting seed data based on reviewer feedback, according to some implementations. At 602, the system 200 provides at least one computer readable operation to one or more reviewers. The one or more reviewers may include one or more of the user (such as the user indicating the text in the user interface 500 in Figure 5), a plurality of local reviewers to the system 200 (such as experts hired by the entity owning the system 200 to review the computer readable operations for the compliance documents), or one or more other users. For example, review of a computer readable operation may be crowdsourced to a plurality of users (such as beta testers or other users using the system 200).

In some implementations, the at least one computer readable operation includes an undefined operation based on a text segment that is unknown to the AI model based on the seed data (604). For example, the seed data may not include a sufficient sample corresponding to the text segment associated with the undefined operation. As such, the AI model may be unable to generate a correct computer readable operation for the text segment (which is referred to as the text segment being unknown to the AI model), and the output from the AI model for the text segment is not a correct computer readable operation for the text segment (which is referred to as an undefined operation). In some implementations of an undefined operation, the AI model may indicate that an operation is undefined (such as by outputting "unknown" or "undefined"). In some implementations, the AI model may output the text segment as received. For example, if the AI model is unable to generate a computer readable operation for text "Add lines 12 and 13" in selected text box 518 in Figure 5, the AI model may output "Add lines 12 and 13." In some implementations, the undefined operation may be an incorrect attempt by the AI model to generate the computer readable operation (such as a computer readable operation including an incorrect arithmetic operation, incorrect objects, incorrect order of objects, and so on). In this manner, the undefined operation may be provided to the one or more reviewers for review. The associated text of the compliance document also may be provided for a reviewer to compare the associated text with the undefined operation.

At 606, the system 200 may obtain feedback regarding the at least one computer readable operation from the one or more reviewers. In some implementations, the feedback may include a suggested computer readable operation associated with the text segment (608). Feedback may be obtained in any suitable manner. For example, instant messaging, electronic mail, or a user portal may be used for a reviewer to provide feedback. For example, the user interface 500 in Figure 5 may be configured to allow a user to provide feedback regarding the operation generated by the AI model and the associated text.

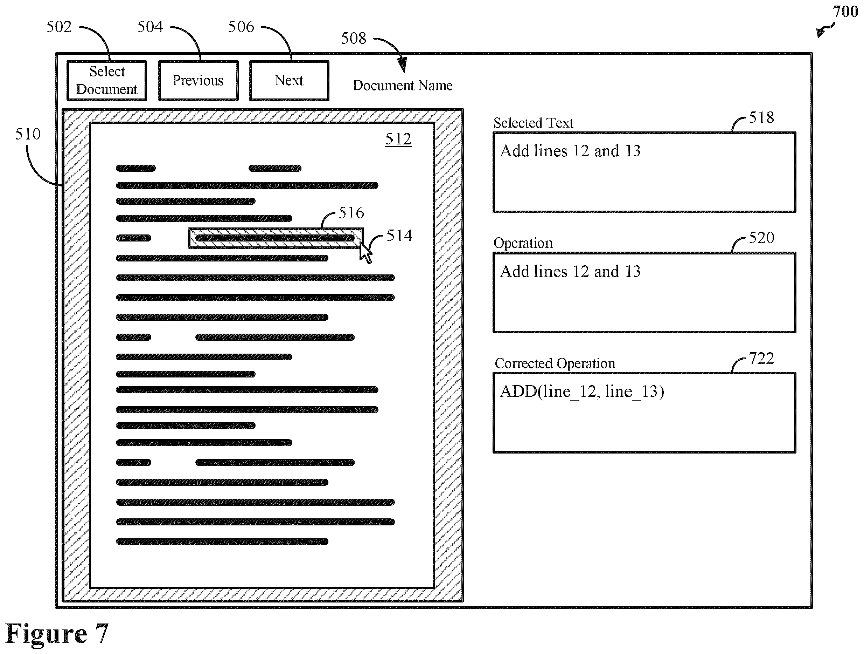

Figure 7 shows an example user interface 700 including an interface to obtain reviewer feedback, according to some implementations. The example user interface 700 may be the same as the user interface 500 in Figure 5, except that the user interface 700 includes means for the user to provide feedback regarding the operations output by the AI model. For example, similar to the user interface 500, the user interface 700 may include buttons 502-506, location 508 to indicate the document name, window 510 to display the document (which may display document 512), cursor 514 to highlight a portion of text (such as the portion of text 516), a selected text box 518, and an operation box 520. The user interface 700 also includes a corrected operation box 722 to allow a user to indicate the correct computer readable operation for the portion of text 516 (which appears in the selected text box 518). In the specific example in Figure 7, the computer readable operation output by the AI model for the portion of text 516 ("Add lines 12 and 13") is an undefined operation (indicated by the operation box 520 including the same text "Add lines 12 and 13" as the selected text box 518, which is an incorrect computer readable operation). The user may type the correct computer readable operation (such as "ADD(line_12, line_13)") into the corrected operation box 722. The feedback obtained by the system 200 may be the user input into the corrected operation box 722.

Referring back to Figure 6, at 610, the system 200 adjusts the seed data based on the feedback. As noted above, the seed data may include sample text inputs and associated sample computer readable operations (such as in the above table of example seed data). In some implementations, adjusting the seed data includes adding a sample text input corresponding to the text segment that is unknown to the AI model (612). For example, the text segment is added to the seed data as a sample text input. In some implementations, the text segment may be added to the complex operations section of the seed data. In some implementations, the text segment may be attached as a new sample text input to the end of the seed data. In some other implementations, a reviewer or other person may indicate where the text segment is to be added in the seed data.

In some implementations of adjusting the seed data, the system 200 may also add a sample computer readable operation associated with the added sample text input and corresponding to the suggested computer readable operation from a reviewer (614). For example, the system 200 may add the corrected computer readable operation from the corrected operation box 722 of the user interface 700 as the sample computer readable operation for the sample text input.

In some implementations, the system 200 may genericize the text segment and the corrected computer readable operation before adding them to the seed data as a sample text input and a sample computer readable operation. For example, if the text segment is "Add lines 12 and 13," the system 200 may be configured to replace 12 and 13 with a and b, respectively. Genericizing the text may be based on the existing seed data (such as the argument operations). As such, instead of including "Add lines 12 and 13" to the seed data as a sample text input, the system 200 may include "Add lines a and b." Similarly, instead of including "ADD(line_12, line_13)" to the seed data as the corresponding sample computer readable operation, the system 200 may include "ADD(line_a, line_b)."

As noted above, a text segment and at least one computer readable operation (which may be an undefined operation) may be provided to a plurality of reviewers. For example, review of the output of the AI model may be crowdsourced to tens, hundreds, or thousands of reviewers. The reviewers may have varying levels of expertise or may provide inconsistent feedback for the same text segment. In some implementations, the system 200 is configured to identify whether and when to adjust the seed data based on the reviewer feedback.

For example, the system 200 may be configured to receive feedback for a defined amount of time (such as 10 minutes, one hour, one day, etc.) after providing the at least one computer readable operation for review. In some implementations, the feedback is stored in the database 220. As noted above, the feedback may be received via the portal 302 (such as using the user interface 700) or in any other suitable manner. The system 200 may compare the feedback collected from a plurality of users during the defined amount of time to identify whether the feedback is the same. For example, the system 200 may determine if the corrected computer readable operations provided by a plurality of reviewers are the same. In some implementations, the system 200 may adjust the seed data with a corrected computer readable operation if the corrected computer readable operation is included in a threshold amount of feedback received (such as greater than 90 percent of feedback received for a text segment). In some implementations, the system 200 may also prevent adjusting the seed data if a threshold amount of feedback is not received. For example, the system 200 may be configured to require feedback from at least 3 reviewers. If only 2 reviewers provide feedback, the system 200 may prevent adjusting the seed data based on the feedback. Instead of a defined amount of time to receive feedback, the system 200 may be configured to receive feedback until a threshold number of reviewers provide feedback.

After adjusting the seed data, the system 200 may provide the adjusted seed data to the AI model for few-shot learning in order to improve the output of the AI model. In some implementations, the previously unknown text segment and the adjusted seed data are provided to the AI model. The AI model may thus be able to output a computer readable operation for the previously unknown text segment, and the database 220 may store the computer readable operation for the text segment. Through the use of crowdsourcing or otherwise using a plurality of reviewers to provide feedback, feedback may be received quickly and any adjustments to the seed data may be performed after receiving the quick feedback. Since training the AI model based on few-shot learning using the seed data may be performed in real-time, the output of the AI model may be improved in real-time. The system 200 may provide the adjusted seed data to the AI model anytime that text segments are to be provided to the AI model (such as for a new compliance document obtained). Since the seed data may be adjusted periodically, the AI model's outputs may continue to be improved until the AI model is optimized for the specific type of compliance documents.

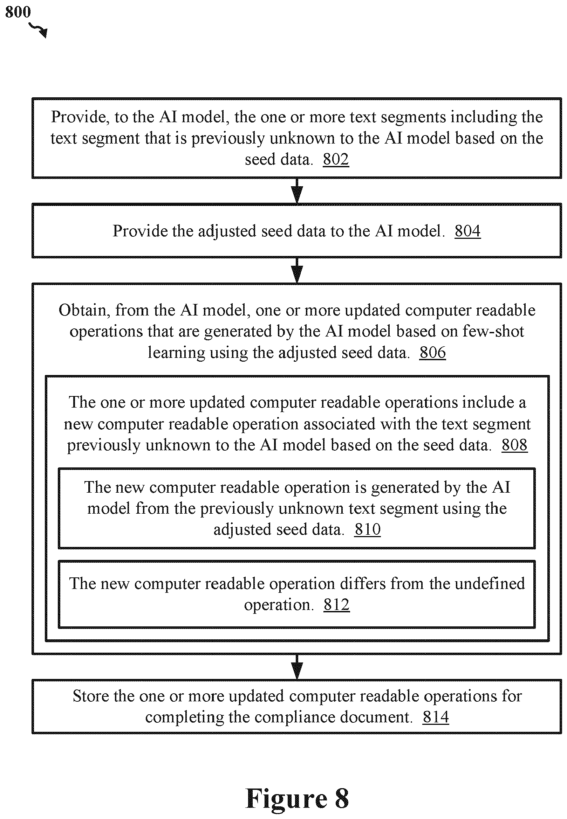

Figure 8 shows an illustrative flow chart depicting an example operation 800 for processing a compliance document using adjusted seed data, according to some implementations. At 802, the system 200 provides, to the AI model, the one or more text segments including the text segment that is previously unknown to the AI model based on the seed data. At 804, the system 200 also provides the adjusted seed data to the AI model. For example, after the system 200 receives feedback for a text segment and adjusts the seed data based on the feedback, the previously unknown text segment may be provided to the AI model with the adjusted seed data. The previously unknown text segment may be from the same compliance document that was previously obtained or may be from a new compliance document. For example, a different compliance document may include similar text as the previously obtained compliance document. As such, a text segment from a newly obtained compliance document may be the same or similar to the text segment from the previously obtained compliance document that was previously unknown to the AI model. In this manner, the AI model may generate a computer readable operation for the previously obtained compliance document or for a newly obtained compliance document.

At 806, the system 200 obtains, from the AI model, one or more updated computer readable operations that are generated by the AI model based on few-shot learning using the adjusted seed data. The one or more updated computer readable operations include a new computer readable operation associated with the text segment previously unknown to the AI model based on the seed data (808). In particular, the new computer readable operation is generated by the AI model from the previously unknown text segment (which may be from the same compliance document or from a different compliance document) using the adjusted seed data (810). For example, the AI model may be trained based on few-shot learning using the adjusted seed data in order to generate the new computer readable operations for the previously unknown text segment. To note, the new computer readable operation differs from the undefined operation (812). For example, as noted above, the undefined operation may be an indication of the operation being undefined, an incorrect operation, a restatement of the text that was input, or another output other than the correct computer readable operation for the text segment. After training the AI model using the adjusted seed data, the AI model may generate the correct computer readable operation if provided the same text segment.

At 814, after receiving the one or more updated computer readable operations, the system 200 may store the one or more updated computer readable operations for completing the compliance document. For example, the updated computer readable operations may be stored in the database 220, and the system may use the computer readable operations along with user data to automatically fill in the compliance document for the user.

While the seed data and the adjusted seed data is described with reference to a single user in the above examples, the same seed data may be used for a plurality of users. In this manner, improvement of the AI model's output based on adjusting the seed data may be a collaborative effort, where many users upload documents, request conversion of text to computer readable operations, and provide feedback to adjust the seed data used for all of the users. With the seed data being adjusted in a collaborative manner, the rate of adjustments to the seed data may be increased such that the performance of the AI model may be improved more quickly.

As described herein, a system may be configured to use an AI model to convert text in compliance documents into computer readable operations for completion of the compliance document without requiring conventional training of the AI model, which would require an extensive amount of time and processing resources. As such, generation of the computer readable operations may be performed in real-time. Also as described herein, the system may be configured to obtain feedback and adjust the seed data used for few-shot learning for the AI model in order to improve the output of the AI model without requiring conventional training of the AI model. As such, improving the output of the AI model may also be performed in real-time. Feedback may be in a collaborative manner using a plurality of persons. In this manner, improving the system performance is based on the collective knowledge of the plurality of reviewers.

As used herein, a phrase referring to "at least one of' or "one or more of' a list of items refers to any combination of those items, including single members. As an example, "at least one of: a, b, or c" is intended to cover: a, b, c, a-b, a-c, b-c, and a-b-c, and "one or more of: a, b, or c" is intended to cover: a, b, c, a-b, a-c, b-c, and a-b-c.

The various illustrative logics, logical blocks, modules, circuits, and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or any conventional processor, controller, microcontroller, or state machine. A processor also may be implemented as a combination of computing devices such as, for example, a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Implementations of the subject matter described in this specification also can be implemented as one or more computer programs, i.e., one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that can be enabled to transfer a computer program from one place to another. A storage media may be any available media that may be accessed by a computer. By way of example, and not limitation, such computer-readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer-readable medium. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product. Additionally, or alternatively, computer-readable media can also include transient media such as carrier signals and transmission media.

Thus, from one perspective, processing compliance documents based on an artificial intelligence (AI) model is described herein. A system is configured to obtain a compliance document and obtain seed data associated with the compliance document. The seed data includes a plurality of sample text inputs and a plurality of sample computer readable operations associated with the plurality of sample text inputs. The system is also configured to parse text in the compliance document into one or more text segments, provide the one or more text segments and the seed data to the AI model, and obtain, from the AI model, one or more computer readable operations associated with the one or more text segments. The one or more computer readable operations are generated by the AI model based on few-shot learning using the seed data. The system is also configured to store the one or more computer readable operations for completing the compliance document.

Various modifications to the implementations described in this disclosure may be readily apparent to those skilled in the art, and the generic principles defined herein may be applied to other implementations without departing from the scope of this disclosure. For example, while the figures and description depict an order of operations to be performed in performing aspects of the present disclosure, one or more operations may be performed in any order or concurrently to perform the described aspects of the disclosure. In addition, or to the alternative, a depicted operation may be split into multiple operations, or multiple operations that are depicted may be combined into a single operation. Thus, the claims are not intended to be limited to the implementations shown herein but are to be accorded the widest scope consistent with this disclosure, the principles, and the novel features disclosed herein.

Further examples of feature combinations taught by the present disclosure are set out in the following numbered clauses:
What is claimed is:
1. A computer-implemented method for compliance document processing, comprising:
   obtaining a compliance document;
   obtaining a seed data associated with the compliance document, wherein the seed data includes a plurality of sample text inputs and a plurality of sample computer readable operations associated with the plurality of sample text inputs;
   parsing text in the compliance document into one or more text segments;
   providing the one or more text segments and the seed data to an artificial intelligence (AI) model;
   obtaining, from the AI model, one or more computer readable operations associated with the one or more text segments, wherein the one or more computer readable operations are generated by the AI model based on few-shot learning using the seed data; and
   storing the one or more computer readable operations for completing the compliance document.
2. The method of clause 1, further comprising:
   obtaining user data associated with the compliance document; and
   completing the compliance document using the user data and the one or more computer readable operations associated with the compliance document.
3. The method of clause 1 or clause 2, further comprising:
   providing at least one computer readable operation of the one or more computer readable operations to one or more reviewers;
   obtaining feedback regarding the at least one computer readable operation from the one or more reviewers; and
   adjusting the seed data based on the feedback.
4. The method of clause 3, wherein:
   the at least one computer readable operation includes an undefined operation based on a text segment that is unknown to the AI model based on the seed data;
   the feedback includes a suggested computer readable operation associated with the text segment; and
   adjusting the seed data includes:
      adding a sample text input corresponding to the text segment; and
      adding a sample computer readable operation associated with the added sample text input and corresponding to the suggested computer readable operation.
5. The method of clause 4, further comprising:
   providing, to the AI model, the one or more text segments including the text segment that is previously unknown to the AI model based on the seed data;
   providing the adjusted seed data to the AI model;
   obtaining, from the AI model, one or more updated computer readable operations that are generated by the AI model based on few-shot learning using the adjusted seed data, wherein:
      the one or more updated computer readable operations includes a new computer readable operation associated with the text segment previously unknown to the AI model based on the seed data, wherein:
      the new computer readable operation is generated by the AI model from the previously unknown text segment using the adjusted seed data; and
      the new computer readable operation differs from the undefined operation; and
   storing the one or more updated computer readable operations for completing the compliance document.
6. The method of any preceding clause, wherein parsing the text is based on one or more of:
   punctuation, wherein each text segment is a separate sentence; or
   one or more line breaks, wherein each text segment is a line of text.
7. The method of any preceding clause, further comprising:
   obtaining a user indication of a portion of the text in the compliance document, wherein parsing the text is based on the user indication.
8. The method of any preceding clause, wherein the AI model includes a Generative Pre-Trained Transformer 3 (GPT-3) model.
9. The method of clause 8, wherein the GPT-3 model includes a davinci model.
10. The method of any preceding clause, wherein compliance document processing is performed in real-time.
11. A system for compliance document processing, the system comprising:
   one or more processors; and
   a memory storing instructions that, when executed by the one or more processors, causes the system to perform operations comprising:
      obtaining a compliance document;
      obtaining a seed data associated with the compliance document, wherein the seed data includes a plurality of sample text inputs and a plurality of sample computer readable operations associated with the plurality of sample text inputs;
      parsing text in the compliance document into one or more text segments;
      providing the one or more text segments and the seed data to an artificial intelligence (AI) model;
      obtaining, from the AI model, one or more computer readable operations associated with the one or more text segments, wherein the one or more computer readable operations are generated by the AI model based on few-shot learning using the seed data; and
      storing the one or more computer readable operations for completing the compliance document.
12. The system of clause 11, wherein the operations further comprise:
   obtaining user data associated with the compliance document; and
   completing the compliance document using the user data and the one or more computer readable operations associated with the compliance document.
13. The system of clause 11 or clause 12, wherein the operations further comprise:
   providing at least one computer readable operation of the one or more computer readable operations to one or more reviewers;
   obtaining feedback regarding the at least one computer readable operation from the one or more reviewers; and
   adjusting the seed data based on the feedback.
14. The system of clause 13, wherein:
   the at least one computer readable operation includes an undefined operation based on a text segment that is unknown to the AI model based on the seed data;
   the feedback includes a suggested computer readable operation associated with the text segment; and
   adjusting the seed data includes:
      adding a sample text input corresponding to the text segment; and
      adding a sample computer readable operation associated with the added sample text input and corresponding to the suggested computer readable operation.
15. The system of clause 14, wherein the operations further comprise:
   providing, to the AI model, the one or more text segments including the text segment that is previously unknown to the AI model based on the seed data;
   providing the adjusted seed data to the AI model;
   obtaining, from the AI model, one or more updated computer readable operations that are generated by the AI model based on few-shot learning using the adjusted seed data, wherein:
      the one or more updated computer readable operations includes a new computer readable operation associated with the text segment previously unknown to the AI model based on the seed data, wherein the new computer readable operation is generated by the AI model from the previously unknown text segment using the adjusted seed data; and
      the new computer readable operation differs from the undefined operation; and
   storing the one or more updated computer readable operations for completing the compliance document.
16. The system of any of clauses 11 to 15, wherein parsing the text is based on one or more of:
   punctuation, wherein each text segment is a separate sentence; or
   one or more line breaks, wherein each text segment is a line of text.
17. The system of any of clauses 11 to 16, wherein the operations further comprise:
   obtaining a user indication of a portion of the text in the compliance document, wherein parsing the text is based on the user indication.
18. The system of any of clauses 11 to 17, wherein the AI model includes a Generative Pre-Trained Transformer 3 (GPT-3) model.
19. The system of clause 18, wherein the GPT-3 model includes a davinci model.
20. The system of any of clauses 11 to 19, wherein the system is configured to perform compliance document processing in real-time.

## Claims

1. A computer-implemented method for compliance document processing, comprising:
obtaining a compliance document;
obtaining a seed data associated with the compliance document, wherein the seed data includes a plurality of sample text inputs and a plurality of sample computer readable operations associated with the plurality of sample text inputs;
parsing text in the compliance document into one or more text segments;
providing the one or more text segments and the seed data to an artificial intelligence (AI) model;
obtaining, from the AI model, one or more computer readable operations associated with the one or more text segments, wherein the one or more computer readable operations are generated by the AI model based on few-shot learning using the seed data; and
storing the one or more computer readable operations for completing the compliance document.

2. The method of claim 1, further comprising:
obtaining user data associated with the compliance document; and
completing the compliance document using the user data and the one or more computer readable operations associated with the compliance document.

3. The method of claim 1 or claim 2, further comprising:
providing at least one computer readable operation of the one or more computer readable operations to one or more reviewers;
obtaining feedback regarding the at least one computer readable operation from the one or more reviewers; and
adjusting the seed data based on the feedback.

4. The method of claim 3, wherein:
the at least one computer readable operation includes an undefined operation based on a text segment that is unknown to the AI model based on the seed data;
the feedback includes a suggested computer readable operation associated with the text segment; and
adjusting the seed data includes:
adding a sample text input corresponding to the text segment; and
adding a sample computer readable operation associated with the added sample text input and corresponding to the suggested computer readable operation.

5. The method of claim 4, further comprising:
providing, to the AI model, the one or more text segments including the text segment that is previously unknown to the AI model based on the seed data;
providing the adjusted seed data to the AI model;
obtaining, from the AI model, one or more updated computer readable operations that are generated by the AI model based on few-shot learning using the adjusted seed data, wherein:
the one or more updated computer readable operations includes a new computer readable operation associated with the text segment previously unknown to the AI model based on the seed data, wherein:
the new computer readable operation is generated by the AI model from the previously unknown text segment using the adjusted seed data; and
the new computer readable operation differs from the undefined operation; and
storing the one or more updated computer readable operations for completing the compliance document.

6. The method of any preceding claim, wherein parsing the text is based on one or more of:
punctuation, wherein each text segment is a separate sentence; or
one or more line breaks, wherein each text segment is a line of text.

7. The method of any preceding claim, further comprising:
obtaining a user indication of a portion of the text in the compliance document, wherein parsing the text is based on the user indication.

8. The method of any preceding claim, wherein the AI model includes a Generative Pre-Trained Transformer 3 (GPT-3) model.

9. The method of claim 8, wherein the GPT-3 model includes a davinci model.

10. The method of any preceding claim, wherein compliance document processing is performed in real-time.

11. A system for compliance document processing, the system comprising:
one or more processors; and
a memory storing instructions that, when executed by the one or more processors, causes the system to perform operations comprising:
obtaining a compliance document;
obtaining a seed data associated with the compliance document, wherein the seed data includes a plurality of sample text inputs and a plurality of sample computer readable operations associated with the plurality of sample text inputs;
parsing text in the compliance document into one or more text segments;
providing the one or more text segments and the seed data to an artificial intelligence (AI) model;
obtaining, from the AI model, one or more computer readable operations associated with the one or more text segments, wherein the one or more computer readable operations are generated by the AI model based on few-shot learning using the seed data; and
storing the one or more computer readable operations for completing the compliance document.

12. The system of claim 11, wherein the operations further comprise:
obtaining user data associated with the compliance document; and
completing the compliance document using the user data and the one or more computer readable operations associated with the compliance document.

13. The system of claim 11 or claim 12, wherein the operations further comprise:
providing at least one computer readable operation of the one or more computer readable operations to one or more reviewers;
obtaining feedback regarding the at least one computer readable operation from the one or more reviewers; and
adjusting the seed data based on the feedback.

14. The system of claim 13, wherein:
the at least one computer readable operation includes an undefined operation based on a text segment that is unknown to the AI model based on the seed data;
the feedback includes a suggested computer readable operation associated with the text segment; and
adjusting the seed data includes:
adding a sample text input corresponding to the text segment; and
adding a sample computer readable operation associated with the added sample text input and corresponding to the suggested computer readable operation.

15. The system of claim 14, wherein the operations further comprise:
providing, to the AI model, the one or more text segments including the text segment that is previously unknown to the AI model based on the seed data;
providing the adjusted seed data to the AI model;
obtaining, from the AI model, one or more updated computer readable operations that are generated by the AI model based on few-shot learning using the adjusted seed data, wherein:
the one or more updated computer readable operations includes a new computer readable operation associated with the text segment previously unknown to the AI model based on the seed data, wherein the new computer readable operation is generated by the AI model from the previously unknown text segment using the adjusted seed data; and
the new computer readable operation differs from the undefined operation; and
storing the one or more updated computer readable operations for completing the compliance document.
